(19) Europäisches Patentamt
European Patent Office
Office européen des brevets

(11) Publication number : **0 348 964 B1**

(12) # EUROPEAN PATENT SPECIFICATION

(45) Date of publication of patent specification : **10.05.95 Bulletin 95/19**

(51) Int. Cl.$^6$ : **G02B 5/30,** G02F 1/01

(21) Application number : **89111826.7**

(22) Date of filing : **29.06.89**

(54) **Polarizing film.**

(30) Priority : **30.06.88 JP 160977/88**

(43) Date of publication of application : **03.01.90 Bulletin 90/01**

(45) Publication of the grant of the patent : **10.05.95 Bulletin 95/19**

(84) Designated Contracting States : **DE FR GB**

(56) References cited :
**EP-A- 0 198 082**
**PATENT ABSTRACTS OF JAPAN, vol. 11, no. 150 (C-422)[2597], 15th May 1987; & JP-A-61 285 259**

(73) Proprietor : **MITSUBISHI PETROCHEMICAL CO., LTD.**
**5-2, Marunouchi 2-chome**
**Chiyoda-ku Tokyo (JP)**

(72) Inventor : **Toda, Hideo Advanced Materials Laboratory**
**MITSUBISHI PETROCHEMICAL CO., LTD**
**8-3-1, Chuo**
**Ami-machi Inashiki-gun Ibaraki-ken (JP)**
Inventor : **Ishibashi, Toshiaki Advanced Materials Laboratory**
**MITSUBISHI PETROCHEMICAL CO., LTD**
**8-3-1, Chuo**
**Ami-machi Inashiki-gun Ibaraki-ken (JP)**
Inventor : **Itsubo, Akira Advanced Materials Laboratory**
**MITSUBISHI PETROCHEMICAL CO., LTD**
**8-3-1, Chuo**
**Ami-machi Inashiki-gun Ibaraki-ken (JP)**
Inventor : **Usami, Takao c/o Plastics Laboratory**
**MITSUBISHI PETROCHEMICAL CO., LTD**
**1, Toho-cho**
**Yokkaichi-shi Mie-ken (JP)**
Inventor : **Akashige, Etsushi c/o Plastics Laboratory**
**MITSUBISHI PETROCHEMICAL CO., LTD**
**1, Toho-cho**
**Yokkaichi-shi Mie-ken (JP)**
Inventor : **Okuyama, Katsumi c/o Plastics Laboratory**
**MITSUBISHI PETROCHEMICAL CO., LTD**
**1, Toho-cho**
**Yokkaichi-shi Mie-ken (JP)**

(74) Representative : **Hansen, Bernd, Dr.rer.nat. et al**
**Hoffmann, Eitle & Partner**
**Patentanwälte**
**Postfach 81 04 20**
**D-81904 München (DE)**

EP 0 348 964 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to a polarizing film by use of a dichroic substance having liquid crystal properties, more particularly to a polarizing film which is excellent in polarizing characteristics with the dichroic substance having liquid crystal properties being highly oriented and yet is endowed with high durability.

Heretofore, polarizing films which have been generally used for liquid crystal displays, photographic filters, etc. have been prepared with the use of a polyvinyl alcohol type resin as the film base material and imparting polarizing performance by attaching iodine or a dichroic dye thereto.

However, although such polarizing films have excellent polarizing performance, they have drawbacks in heat resistance, humidity resistance, and they are generally practically applied with both surfaces of the film being covered with a film (protective film). However, because no sufficient durability can be obtained even with such protective film, its uses cannot but be limited depending on the purpose of use under the present situation. In recent years, as liquid crystal devices are utilized more widely for mounting on vehicles, industrial instruments, etc., it has been strongly demanded to have good durability of polarizing film.

As a means for improving these polarizing films, for example, there has been proposed a monoaxially stretched polyester film obtained by mixing, melting and extruding a dyed film or dyes (Japanese Provisional Patent Publication No. 285259/1986). However, such polarizing film obtained, although it may be sufficient in durability, has only low polarizing performance due to poor orientability and it is practically applied only to uses within the limited range.

### SUMMARY OF THE INVENTION

Accordingly, an object of the present invention, in view of the state of the art as described above, is to provide a novel polarizing film which can satisfy at the same time excellent polarizing performance and high durability.

The present invention provides a polarizing film, comprising a dichroic substance having liquid crystal properties contained and oriented in a hydrophobic resin.

### BRIEF DESCRIPTION OF THE DRAWING

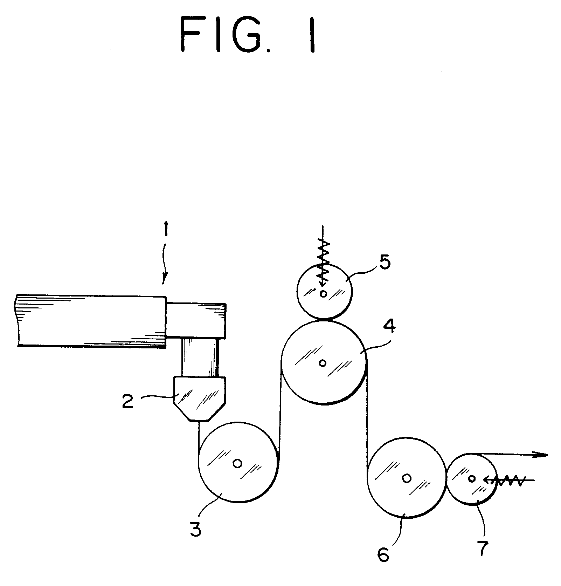

Fig. 1 shows a roll stretching machine used in preparation of the polarizing film of the present invention, in which 1 is an extruding machine, 2 a T-dice, 3 chilling rolls, 4 low speed (preheating) rolls, 5 and 7 nip rolls and 6 high speed (chilling) rolls.

### DESCRIPTION OF THE PREFERRED EMBODIEMNTS

The dichroic substance having liquid crystal properties in the present invention is a substance satisfying the following conditions:

(1) it is a dichroic substance with the absorbance relative to the linear polarizing light in parallel to the molecular longer axis ($A_{//}$) and the absorbance perpendicular to the molecular longer axis ($A\perp$) being different from each other, which may be either the P type ($A_{//} > A_{\perp}$) or the N type ($A_{//} > A_{\perp}$), preferably the P-type dichroic substance;

(2) it has a melting point ($T_m$) and a liquid crystal transition temperature ($T_{LC}$) which are equal to each other, and also has an isotropic liquefaction temperature ($T_i$).

However, substances having indefinite $T_i$ due to pyrolysis, etc. are also included, and also the temperature range of the liquid crystal phase, which is not particularly limited, may be 20 °C or higher, preferably 40 °C or higher, more preferably 60 °C or higher.

As used herein, the melting point ($T_m$), the liquid crystal transition temperature ($T_{LC}$), the isotropic liquefaction temperature ($T_i$) and the glass transition point ($T_g$) mentioned below mean the temperatures determined according to the methods as described below.

First, the glass transition point ($T_g$) and the melting point ($T_m$) are defined as follows. That is, in the glass transition curve and the melting curve obtained, using Differential scanning calorimeter, by elevating the temperature to a temperature higher by 20 °C than the temperature at which a sample amount of 5 mg is completely melted with a temperature raising rate of 320 °C/min, maintaining thereat for 3 minutes, then falling down the temperature with a rate of 10 °C/min, maintaining the sample at a temperature lower by 50 °C than the temperature at which it is crystallized or solidified, and thereafter elevating the temperature again with a rate of

20 °C/min in the case of glass transition point and with a rate of 10 °C/min in the case of melting point, the glass transition point refers to the temperature at the initiation point of heat content change from the baseline of the glass transition curve, and the melting point refers to the temperature at the end point of melting of the melting curve.

Next, the liquid crystal transition temperature ($T_{LC}$) refers to the temperature at the initiation point where a birefringent optical pattern inherent in liquid crystal is observed in a polarizing microscope equipped with a heating device, when a small amount of a sample is sandwiched between cover glasses, melted by heating, cooled to room temperature and elevated in temperature with a rate of 10 °C/min, while the isotropic liquefaction temperature ($T_I$) refers to the temperature at the initiation point where the birefringent optical pattern disappears when temperature elevation is further continued, whereby the liquid crystal becomes isotropic liquid.

The liquid crystal state of such dichroic substance is not particularly limited, but either one of nematic, various smectic (A, C, F, B, E, G and D) and cholesteric liquid crystals, etc. may be employed, but preferably nematic or smectic liquid crystal.

The maximum absorption wavelength ($\lambda$max) of the dichroic substance to be used in the present invention is not particularly limited, but it may be preferably 250 nm or higher, more preferably 270 nm or higher.

As the dichroic substance having the properties as described above to be used in the present invention, there can be employed dichroic liquid crystals represented by the formulae (a) to (g).

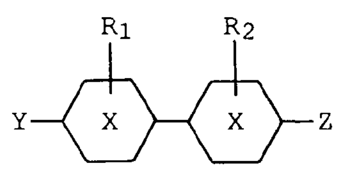 (a)

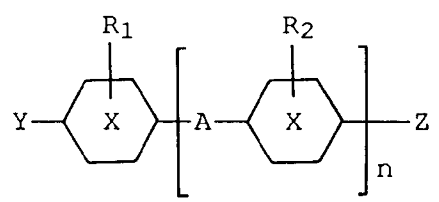 (b)

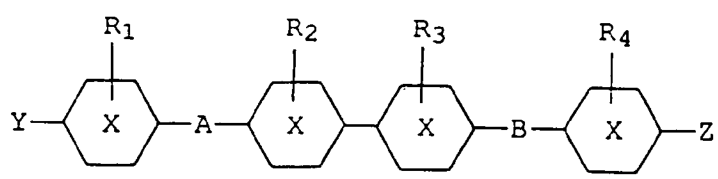 (c)

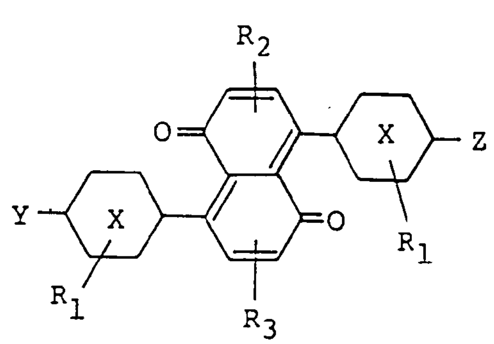 (f)

wherein

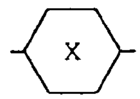

represents

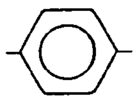 , 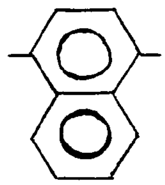 , 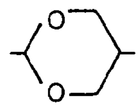 , 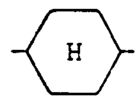

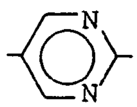 , 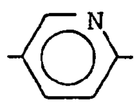 , 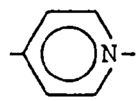 or 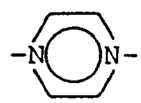 ;

-A- and -B- each represent -CH=N-,

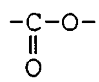 , 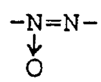 ,

-N=N-, -CH=CH-, -C≡C-,

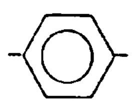 , 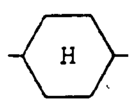 or 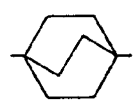 ;

Y- and Z- each represent H-, $CH_3(CH_2)_m$- $CH_3(CH_2)_mO$- Cl-, Br-, I-, F-, CHO-, $CH_3(CH_2)_mCOO$-, -CN, $-NO_2$, $-NH_2$, $-N(R)_2$, $-N-[(CH_2)_m-CH_3]_2$,

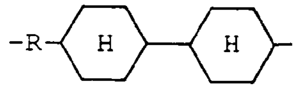 ,

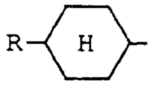 , 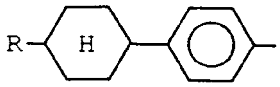 , 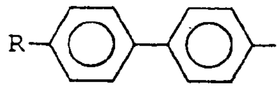 , R–O– ,

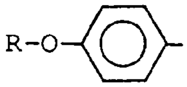 , 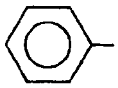 , 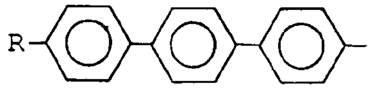 ,

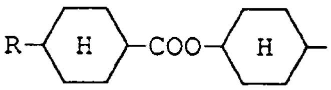 , 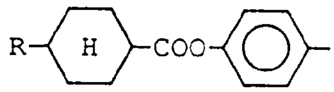 , 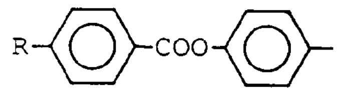

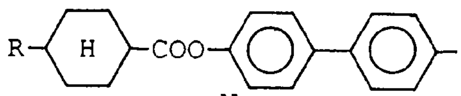 , 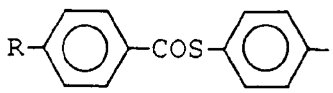 ,

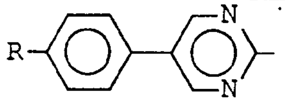 , 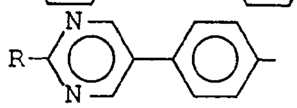 , 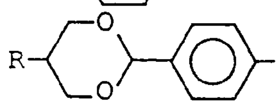 ,

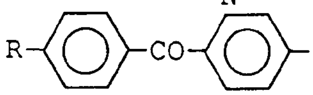 or 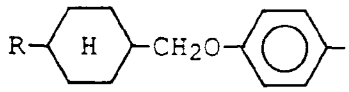

(where R represents a hydrogen atom or an alkyl group having 1 to 10 carbon atoms); $R_1$, $R_2$, $R_3$ and $R_4$ each represent H-, $CH_3(CH_2)_m$- $CH_3(CH_2)_mO$-, Cl-, Br-, I-, F-, or $O_2N$-; where m is an integer equal to 0 to 10 and n is an integer of 1 to 4.

According to a preferred embodiment of the invention, the dichroic substance is selected from the group consisting of of:

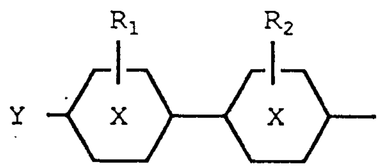 (a)

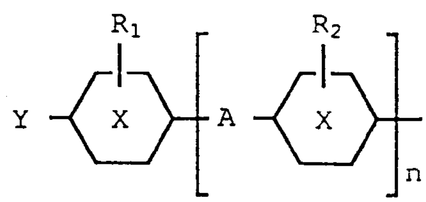 (b)

and

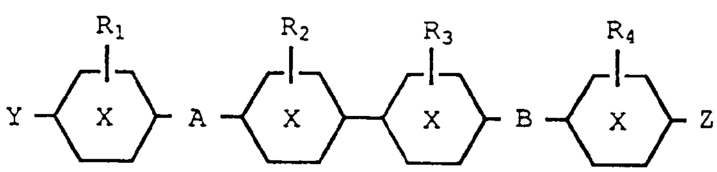 (c)

wherein

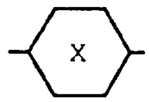

represents

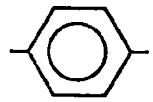 ;

-A- and -B- each represent -CH=N-,

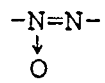 ,

-N=N- or -CH=CH-; Y- and Z- each represent $CH_3(CH_2)_m$-, $CH_3(CH_2)_mO$-, Cl-, Br-, I-, F-, CHO-, $CH_3(CH_2)_mCOO$-, -CN, $-NO_2$, $-NH_2$, -N(R)$_2$, -N-(($CH_2)_m$-$CH_3)_2$,

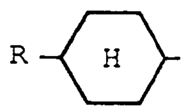 , 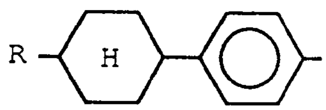 , 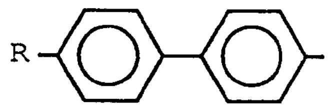 ,

R-O- , 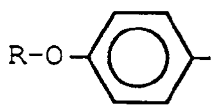 , 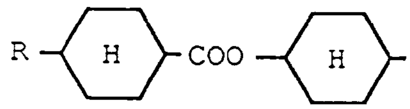 ,

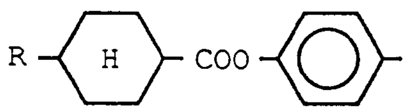 , 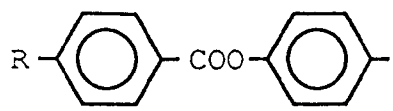 ,

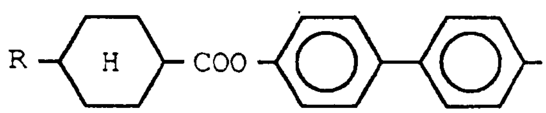 or 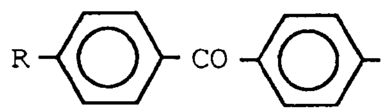 ,

where R represents a hydrogen atom or an alkyl group having 1 to 10 carbon atoms; $R_1$, $R_2$, $R_3$ and $R_4$ each represent H-, $CH_3(CH_2)_m$-, $CH_3(CH_2)_mO$-, Cl-, Br-, I-, F- or $O_2N$- where m is an integer equal to 0 to 10; and n is an integer of 1 to 4; provided that Y- and Z- are different from each other.

These are not limited to low molecular weight compounds, but also include even oligomers or polymers having reactive groups imparted to a part of the end groups and introduced into the main chain or the side chain of polymers.

Examples of such dichroic acid having liquid crystal properties may preferably include azo type substances represented by the formula:

$$Y\text{-}(N{=}N\text{-}E)_{p}\text{-}(N{=}N\text{-}G)_{q}\text{-}Z$$

wherein Y and Z each represent a terminal group as mentioned above, E and G each represent a phenylene group or naphthylene group which may be substituted, and p and q each represent integers of 1 to 3. As the substituent on E and G, there may be used H-, $CH_3(CH_2)_m$- (where m is an integer of 0 to 10, preferably 1 to 6), $CH_3(CH_2)_mO$- (where m is an integer of 0 to 10), Cl-, Br-, I-, F-, -CN, $-NO_2$, $-NH_2$, -N(R)$_2$ or

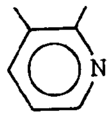
,

and more secifically, for example, azo type substances as shown in Table 1 may be mentioned.

Also, by using the compounds represented by the following formulae:

Y-N=CH-E-CH=N-Z

E, Y and Z each represent the same groups as mentioned above,

and

Y-CH=N-G-N=CH-Z

Y and Z each represent the same groups as mentioned above, and G represents a phenylene group, a naphthalene group or a biphenylene group which may be also substituted, a polarizing film exhibiting polarization to ahead of UV-region can be obtained.

Table 1

| No. | Structure |
|---|---|
| 1 | 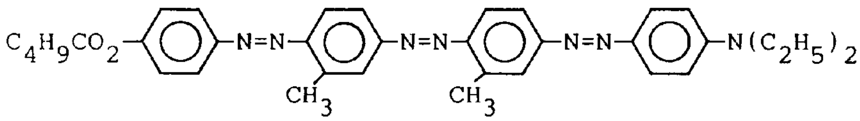 |
| 2 | 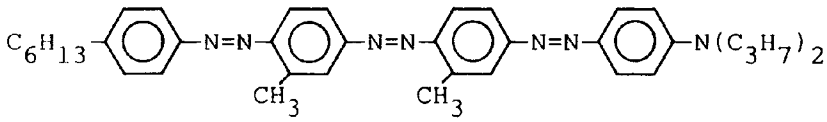 |
| 3 | 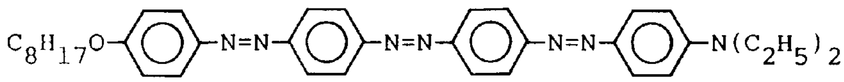 |
| 4 | 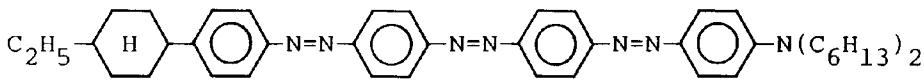 |
| 5 | 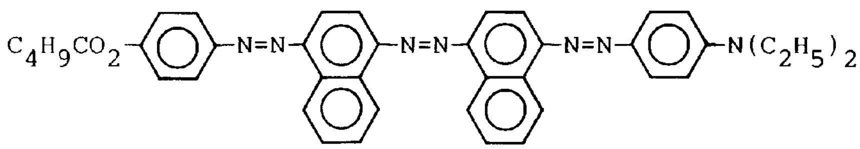 |
| 6 | 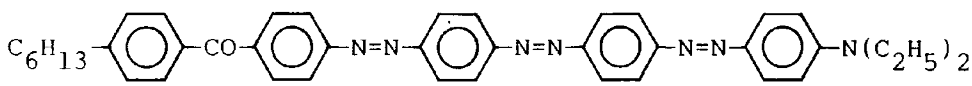 |
| 7 | 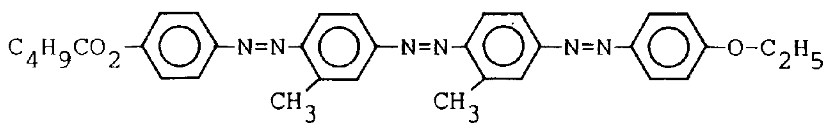 |
| 8 | 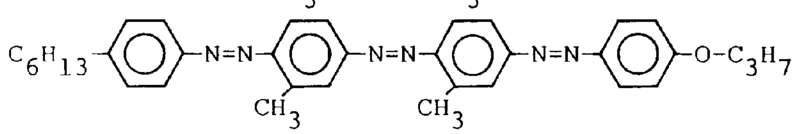 |
| 9 | 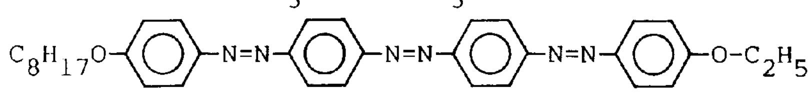 |
| 10 | 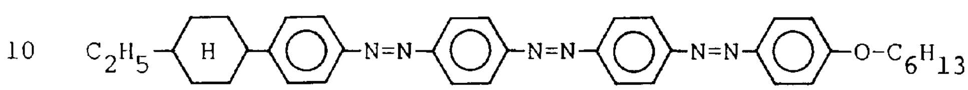 |
| 11 | 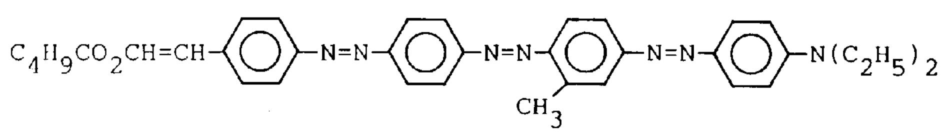 |

The dichroic substance having liquid crystal properties as described above can be prepared, for example, as follows.

An amino compound represented by the following formula:

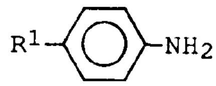

(I)

wherein $R^1$ has the same meaning as the above R, is diazotized in conventional manner and coupled with a compound represented by the following formula:

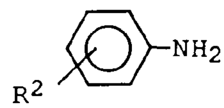

(II)

wherein $R^2$ has the same meaning as the above R, to obtain a monoazo compound represented by the following formula:

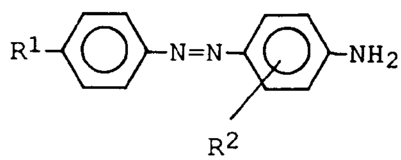

(III)

then diazotizing the compound (III) and coupling the diazotized product with a compound represented by the following formula:

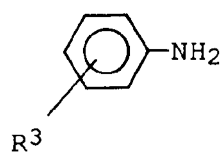

(IV)

wherein $R^3$ has the same meaning as the above R, to obtain a disazo dye represented by the following formula:

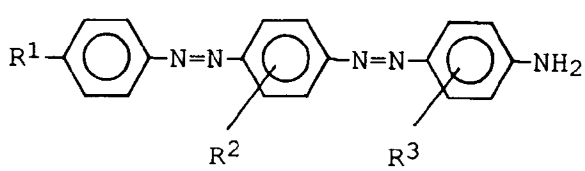

(V)

subsequently diazotizing the compound (V) followed by coupling with a compound represented by the following formula:

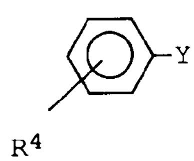

(VI)

wherein Y represents

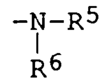

(where $R^5$ and $R^6$ are the same as the above R) or -OH group, and $R^4$ is the same as the above R, to obtain a trisazo dye represented by the following formula (VII):

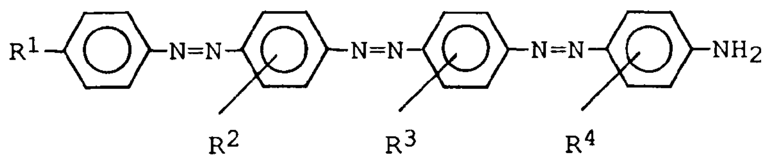

(VII)

In the above formula (VII), when Y is -OH group, further a compound represented by the following formula:

$R^7$-X (VIII)

wherein X is a halogen atom and $R^7$ is the same as the above R,

is reacted therewith, whereby a compound represented by the following formula can be derived:

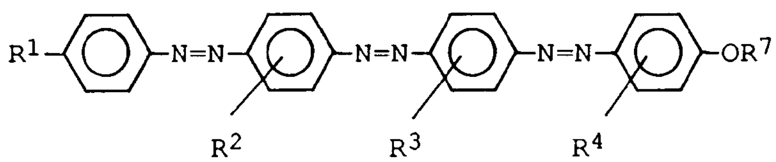

(IX)

As the hydrophobic resin to be used in the present invention, thermoplastic resins which can be molded into transparent films and can be stretched may be employed without particular limitation. For example, there may be employed homopolymers or copolymers including polyolefins such as polyethylene, polypropylene, etc.; polyvinylidene halides such as polyvinylidene fluoride, polyvinylidene chloride, etc.; polyesters such as polyethylene terephthalate, polybutylene terephthalate, etc.; polycarbonates; poly(meth)acrylate; polyethers; polystyrene; polysulfone; polyamide; etc. These polymers may be also used as a mixture.

When a dichroic substance having polarizing characteristic at the UV-ray region is used, it is preferred to use a combination of polyethylene, polypropylene, polyamide or polyvinylidene fluoride, and by use of such resins, a polarizing film having excellent polarizing characteristic in near-UV-ray region of 400 nm or less can be obtained.

These hydrophobic resins may have molecular weights which are not particularly limited, provided that they can be molded according to the known film fabrication and stretching methods.

The dichroic substance having liquid crystal properties as described above is contained in an amount of 0.001 to 15 % by weight, preferably 0.001 to 5 % by weight, more preferably 0.01 to 2 % by weight, and is highly oriented in the hydrophobic resin.

In the polarizing film of the present invention, in addition to the dichroic substance having liquid crystal properties and the hydrophobic resin as described above, other additives such as dye having no dichroism, UV-ray absorbers, antioxidants, etc. may be also contained, and the content of them may be 3 % by weight or less.

In the following, the method for preparing the polarizing film of the present invention is to be described.

First, the dichroic substance having liquid crystal properties and the hydrophobic resin are mixed and kneaded at a predetermined ratio, and the kneading temperature may be a temperature at which the dichroic substance having liquid crystal properties exhibits liquid crystal state or isotropic liquid state, preferably liquid crystal state. Dispersion of the dichroic substance at this time may be in either molecular state or a mass of molecules. If the kneading temperature is out of the above temperature, uniform dispersion of the dichroic substance will be obstructed, whereby no good polarizing film can be obtained.

Kneading can be practiced according to the means conventionally practiced by use of, for example, Brabender, etc.

As the next step, the kneaded product is fabricated into a film at the above kneading temperature. Film fabrication may be practiced according to the T-die method or the inflation method.

Subsequently, by stretching the unstretched film obtained by film fabrication according to uniaxial stretching, the polarizing film of the present invention is obtained.

Stretching may be practiced at a temperature at which the dichroic substance having liquid crystal properties exhibits liquid crystal state or crystal state, preferably crystal state. Outside of this temperature range, orientation of the dichroic substance will become undesirably insufficient.

If the melting point of the hydrophobic resin is defined as $T_m$ and the glass transition point as $T_g$, stretching may be preferably effected at $T_m$ - 100 °C to $T_m$ - 5 °C or $T_g$ - 50 °C to $T_g$ + 100 °C. By stretching to 1.1 to 18-fold, preferably 2 to 12-fold, more preferably 3 to 10-fold, in uniaxial direction under the temperature, a polarizing film with a thickness of, for example, 10 to 150 μm can be obtained. Stretching can be performed generally by use of roll stretching machine, etc.

The kneading-film fabrication temperature and the stretching temperature as described above also depend on selection of the hydrophobic resin and, for example, in the case of polypropylene, the kneading-film fabrication temperature may be preferably 180 to 300 °C, and the stretching temperature 70 to 160 °C, while in the case of polyethylene terephthalate, they may be preferably 270 to 350 °C and 60 to 160 °C, respectively.

The polarizing film thus prepared can be used as such for film, sheet, or otherwise can be applied with various workings before use. For example, depending on the use, lamination may be effected with other polymers, or alternatively a transparent electroconductive film such as indium-tin oxide, etc. may be formed on the surface of the polarizing film of the present invention according to vapor deposition, sputtering or coating method to be provided for practical application.

The polarizing film thus obtained can be used for liquid crystal display, display for mounting on vehicle, color phase variable filter, variable transmission sunglass, photographic film, cathode-ray tube, reflection preventive filter of measuring instrument numerical value displaying portion, etc.

## EXAMPLES

The present invention is described in more detail below by referring to Examples.

The characteristics of the polarizing film were examined according to the following measurement method and evaluation standards.

(1) Polarization performance

By use of a spectrophotometer (MPS-2000, manufactured by Shimazu Seisakusho K.K.), two sheets of polarizing films were superposed so that the stretched directions may be in parallel to each other, and the light transmittance at the visible region maximum absorption wavelength measured in the optical pathway of the spectrophotometer ($T_{/\!/}$) and the light transmittance at the same wavelength measured by placing the two sheets of the polarizing films as superposed so that the stretched directions were perpendicular to each other ($T_\perp$) were determined, and the polarization degree (V) was calculated by use of the following formula:

$$V\ (\%) = \sqrt{\frac{T_{/\!/} - T_\perp}{T_{/\!/} + T_\perp}} \times 100$$

(2) Heat resistance

The polarizing film was subjected to the heat treatment in hot air at 100 °C for 1000 hours, and the polarizing performance after that was compared with that before the treatment and evaluated.

(3) Humidity resistance

The polarizing film was subjected to the humidity and heat treatment at 80 °C and 95 % RH (relative humidity) for 1000 hours, and the polarizing performance after that was compared with that before the treatment and evaluated.

### Example 1

Synthesis of dichroic substance

(1) Synthesis of dye A:

(1)-1 Synthesis of monoazo dye

Into 100 ml of water were added 9.7 g of butyl 4-aminobenzoate and 10.4 ml of conc. hydrochloric acid to

be dissolved therein, and 3.45 g of sodium nitrite dissolved in 10 ml of water was added dropwise at 5 °C or lower to effect diazotization.

As the next step, 5.4 g of m-toluidine dissolved in 10 ml of dimethylformamide was added into the diazo solution at 10 °C or lower, followed by stirring for 2 hours to effect coupling, and then the mixture was filtered and the residue was washed with water, washed with methanol and dried to obtain 9.5 g of a monodiazo dye represented by the following formula:

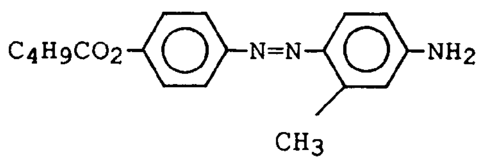

(1)-2 Synthesis of disazo dye

To a solution of 9.3 g of the monoazo dye obtained dissolved in 100 ml of acetic acid was added 6.3 ml of conc. hydrochloric acid, and at 5 °C or lower, a solution of 2.1 g of sodium nitrate dissolved in 6 ml of water was added dropwise to effect diazotization.

As the next step, 3.2 g of m-toluidine dissolved in 10 ml of dimethylformamide was added into the diazo solution at 10 °C or lower, the mixture was stirred for 2 hours and then filtered. The residue was washed with water, then with methanol and dried to obtain 8.6 g of a disazo dye (crude product) represented by the following formula:

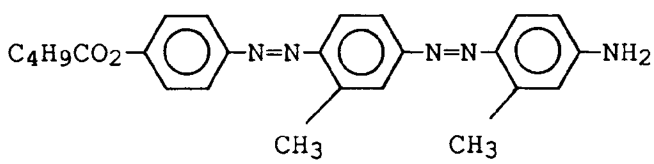

(1)-3 Synthesis of trisazo dye

To a solution of 7.5g of the disazo pigment obtained dissolved in 100 ml of dimethylformamide was added 4.5 ml of conc. hydrochloric acid, and a solution of 1.3 g of sodium nitrite dissolved in 4 ml of water was added dropwise to effect diazotization.

As the next step, a solution of 2.7 g of N,N-diethylaniline dissolved in 10 ml of dimethylformamide was added into the diazo solution at 10 °C or lower, the mixture was stirred for 2 hours, and then filtered. The residue was washed with water, then with methanol and dried to obtain 5.1 g of a crude dye.

The resulting crude dye was purified through a silica gel column chromatography by developing with toluene and collected,the solvent was distilled to obtain a trisazo dye.

(2) Synthesis of dye B

Diazotization and coupling were conducted in the same manner as in (1)-1 and then (1)-2 except for using 8.9 g of p-n-hexylaniline in place of butyl 4-aminobenzoate to obtain 8.1 g of a disazo dye represented by the following formula:

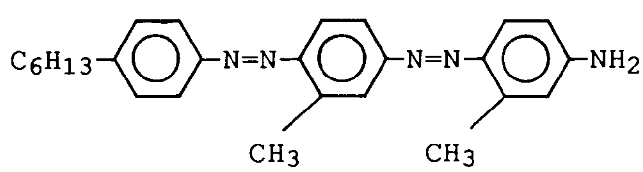

As the next step, by use of 7.4 g of the disazo dye, diazotization was conducted, and coupling and subsequent treatment were conducted in the same manner as in (1)-3 to obtain a trisazo dye.

(3) Synthesis of dye C

Diazotization and coupling were conducted in the same manner as in (1)-1 and then (1)-2 except for using 11.1 g of p-n-octyloxyaniline in place of butyl 4-aminobenzoate and 4.7 g of aniline in place of m-toluidine to obtain 9.2 g of a disazo dye represented by the following formula:

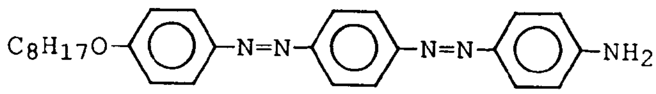

As the next step, by use of 7.7 g of the disazo dye, diazotization was conducted, and coupling and subsequent treatment were conducted in the same manner as in (1)-3 to obtain a trisazo dye.

(4) Synthesis of dye D

Diazotization of 7.5 g of the disazo dye obtained in (1)-2 was effected in the same manner as in (1)-3, and then a solution of 0.7 g of sodium hydroxide and 1.7 g of phenol dissolved in 30 ml of water was added dropwise into the diazo solution at 10 °C or lower. After stirring the mixture for 2 hours, 80 ml of water was added, and the mixture was neutralized with hydrochloric acid and filtered. The residue was washed with water and dried to obtain 7.4 g of a trisazo dye represented by the following formula:

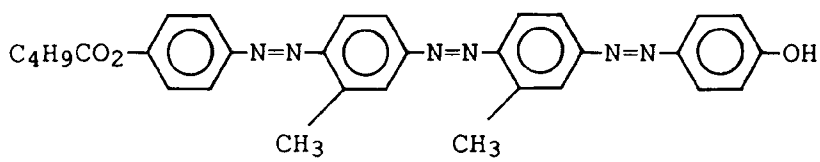

As the next step, 4.9 g of the trisazo pigment and 0.6 g of potassium hydroxide were added into 100 ml of a solvent mixture of water/ethanol (1/3), 3.2 g of ethyl iodide was added dropwise at 60 °C and the reaction was carried out at the same temperature for 8 hours. After cooling, 200 ml of water was added, the mixture was filtered, the residue was washed with water, then with methanol and dried to obtain 3.7 g of a crude dye. Further, this product was purified by column chromatography to obtain a trisazo dye.

The dyes E to H were obtained according to the method for preparing dyes A to D.

(E) 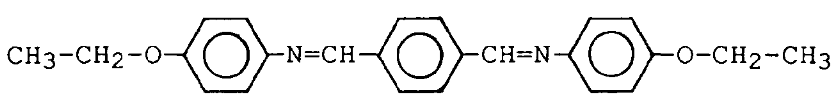

(F) 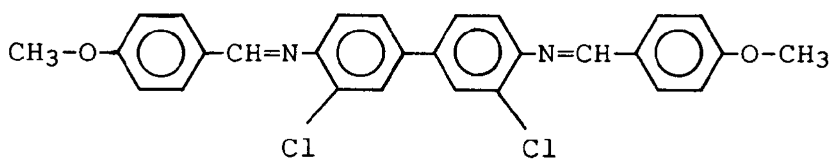

(G) 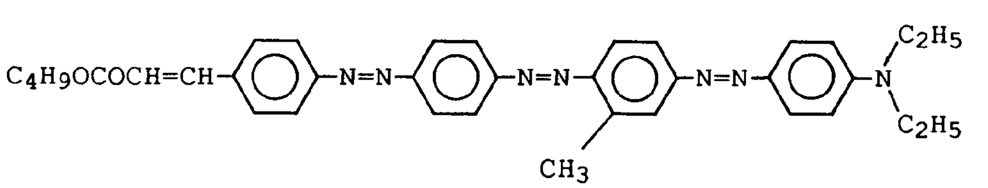

The structures and the physical properties of the dichroic substances thus obtained are shown in Table 2, and the manners in which their forms are changed according to thermal history were observed as described below.

A small amount of sample was sandwiched between cover glasses, melted on a heat stage, spread thinly under a pressure to be cooled to room temperature (25 °C). Then the cooled sample was set on a polarizing microscope (crossed Nicols F) and observed while elevating the temperature.

For comparison, the known dichroic substance (anthraquinone type dye) exhibiting no liquid crystal property represented by the following formula:

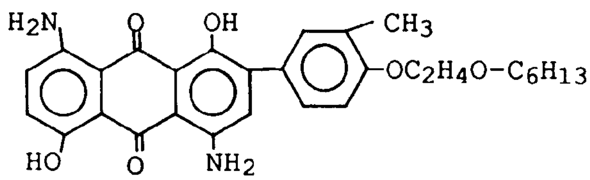

was also listed together in Table 2 as H, and similarly observed.

Table 2

| Dichroic substance | Color hue (in acetone) | Transition temperature (°C) | |
|---|---|---|---|
| | | $T_{LC}$ | $T_i$ |
| A | Red | 170 | 246 |
| B | Red | 163 | 232 |
| C | Red | 156 | 217 |
| D | Red | 158 | 225 |
| E | Pale yellow | 196 | 280 |
| F | Pale yellow | 139 | 330 |
| G | Red | 176 | 250 |
| H | Blue | —— | —— |

As is apparent from Table 2 and the above observations, it has been found that the dichroic substances A - G having liquid crystal properties are transferred from crystalline state to liquid crystal state at 139 to 222 °C, and also from liquid crystal state to isotropic liquid state at 217 to 330 °C. On the other hand, the known dichroic substance H having no liquid crystal property was found to be only transferred from crystalline state to isotropic liquid state at 156 °C (melting point).

Example 2

Preparation of polarizing film

An amount 120 g of a polypropylene resin (FY-4, manufactured by Mitsubishi Petrochemical Co., Ltd.) and 0.99 g of a dichroic substance (A) having liquid crystal properties shown in Table 2 were blended uniformly at 200 °C by use of a Brabender to prepare a masterbatch (M/B).

The M/B obtained (110 g) and 780 g of the polypropylene resin were fabricated into a film at 210 °C by means of a 15 mm extruder 1 equipped with a T-dice 2 (dice width: 120 mm) as shown in Fig. 1.

Subsequently, the film was taken up on the chilling rolls 3 shown in Fig. 1, passed through the low speed rolls 4 (0.85 m/min.) at 120 °C and then stretched by high speed chilling rolls 6 (5.5 m/min.) to 6.5-fold in the longitudinal direction to obtain a polarizing film with a thickness of about 75 µm. In Fig. 1, 5 and 6 are nip rolls.

The polarizing characteristics of the polarizing film obtained were transmittance ($T_o$) = 40.3 % at 500 nm and polarizing degree (V) of 99.3 % and no variance in the width direction was recognized.

Here, $T_o$ refers to light transmittance of one sheet of polarizing film, which is hereinafter the same.

Evaluations of heat resistance, humidity resistance of the polarizing film are shown in Table 3 and Table 4.

Example 3

A polarizing film was prepared in the same manner as in Example 2 except for using 0.66 g of B in place of A shown in Table 2 as the dichroic substance having liquid crystal properties.

The polarizing characteristics of the polarizing film obtained were transmittance ($T_o$) = 39.3 % at 490 nm and polarizing degree (V) of 93.7 % and no variance in the width direction was recognized.

Evaluations of heat resistance and humidity resistance of the polarizing film are also shown in Table 3 and Table 4.

Table 3 Heat resistance test

| Example | Before test | After test | | |
|---|---|---|---|---|
| | Polarizing degree (%) | Polarizing degree (%) | Deformation | Discoloration |
| 2 | 93.3 | 92.5 | None | None |
| 3 | 93.7 | 93.2 | None | None |

Table 4 Humidity resistance test

| Example | Before test | After test | | |
|---|---|---|---|---|
| | Polarizing degree (%) | Polarizing degree (%) | Deformation | Discoloration |
| 2 | 93.3 | 92.1 | None | None |
| 3 | 93.7 | 92.8 | None | None |

As is apparent from Table 3 and Table 4, the polarizing films of the present invention are not substantially changed in appearance and polarizing characteristics before and after the respective treatments, and therefore are excellent in durability.

Example 4

An amount 140 g of a polyvinylidene fluoride (Solef 1008, manufactured by Solvay) and 1.0 g of the dichroic substance C having liquid crystal properties shown in Table 2 were uniformly blended at 200 °C by use of a Brabender to prepare a masterbatch (M/B).

The M/B obtained (125 g) and 765 g of the polyvinylidene fluoride were fabricated into a film at 210 °C by use of a 15 mm extruder equipped with a T-dice (dice width 120 mm).

Subsequently, stretching was effected under the same conditions as in Example 2 to obtain a polarizing film.

The polarizing characteristics of the polarizing film obtained were transmittance ($T_o$) = 38.0 % at 510 nm, polarizing degree (V) of 95.0 % and no variance in the width direction was recognized.

Example 5

A polarizing film was prepared in the same manner as in Example 4 except for using 1.0 g of D in place of C shown in Table 2 as the dichroic substance having liquid crystal properties.

The polarizing characteristics of the polarizing film obtained were transmittance ($T_o$) = 39.3 % at 500 nm, polarizing degree (V) of 93.7 % and no variance in the width direction was recognized.

Example 6

Preparation of polarizing film

An amount 120 g of a polyethylene resin (FZ70, manufactured by Mitsubishi Petrochemical Co., Ltd.) and 1.0 g of a dichroic liquid crystal E were blended uniformly at 200 °C by use of a Brabender to prepare a masterbatch (M/B).

The M/B obtained (110 g) and 780 g of the polyethylene resin were fabricated into a film at 200 °C by means of a device as shown in Fig. 1, passed through the low speed rolls 4 (0.85 m/min.) at 100 °C and then stretched by high speed chilling rolls 6 (5.5 m/min.) to 6.0-fold in the longitudinal direction to obtain a polarizing film with a thickness of about 75 μm.

The polarizing characteristics of the polarizing film obtained were transmittance ($T_o$) = 40.3 % at 370 nm, polarizing degree (V) of 98.0 % and no variance in the width direction was recognized.

Example 7

An amount 140 g of a polyvinylidene fluoride (Solef 1008, manufactured by Solvay) and 1.0 g of a dichroic liquid crystal E were uniformly blended at 200 °C by use of a Brabender to prepare a masterbatch (M/B).

The M/B obtained (125 g) and 765 g of the polyvinylidene fluoride were fabricated into a film at 210 °C by use of a device as shown in Fig. 1.

Subsequently, stretching was effected under the same conditions as in Example 2 to obtain a polarizing film.

The polarizing characteristics of the polarizing film obtained were transmittance ($T_o$) = 37.7 % at 360 nm, polarizing degree (V) of 94.6 % and no variance in the width direction was recognized.

Example 8

A polarizing film was prepared in the same manner as in Example 6 except for using 1.0 g of F shown in Table 2 as the dichroic substance having liquid crystal properties.

The polarizing characteristics of the polarizing film obtained were transmittance ($T_o$) = 35.5 % at 360 nm, polarizing degree (V) of 93.3 % and no variance in the width direction was recognized.

Example 9

A polarizing film was prepared in the same manner as in Example 2 except for using 1.2 g of G in place of A shown in Table 2 as the dichroic substance having liquid crystal properties.

The polarizing characteristics of the polarizing film obtained were transmittance ($T_o$) = 38.2 % at 510 nm, polarizing degree (V) of 99.6 % and no variance in the width direction was recognized.

Comparative example

An amount 80 g of a polypropylene resin (FY-4, manufactured by Mitsubishi Petrochemical Co., Ltd.) and 0.66 g of a dichroic substance H having no liquid crystal property shown in Table 2 were blended uniformly at 200 °C by use of a Brabender to prepare a masterbatch (M/B).

The M/B obtained was formed into a film under the same conditions as in Example 2 and stretched under the same conditions as in Example 2 to obtain a polarizing film.

The polarizing characteristics of the polarizing film obtained were transmittance ($T_o$) = 35.0 %, polarizing degree (V) of 81.4 % and variance in the width direction was recognized.

The polarizing film of the present invention, in which a dichroic substance having liquid crystal properties is highly oriented in a hydrophobic resin, has excellent polarizing characteristics with polarizing degree of 90 % or higher, and also has high durability with excellent heat resistance and humidity resistance.

Accordingly, the polarizing performance will not be substantially changed with heat or moisture and can maintain excellent polarizing characteristics for a long term.

The polarizing film of the present invention can be also applied with various workings depending on the purpose of use, and therefore its uses are wide and also it is of high commercial value.

## Claims

1. A polarizing film comprising a dichroic substance having liquid crystal properties contained and highly oriented in a hydrophobic resin, wherein said dichroic substance is selected from the compounds represented by the formulas (a) to (c) and (f):

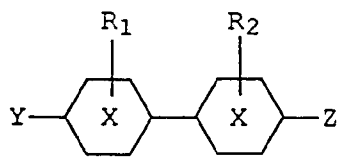

(a)

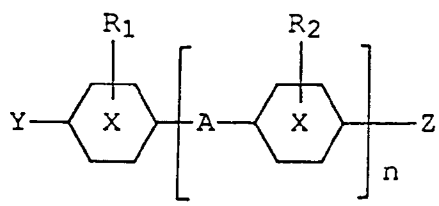

(b)

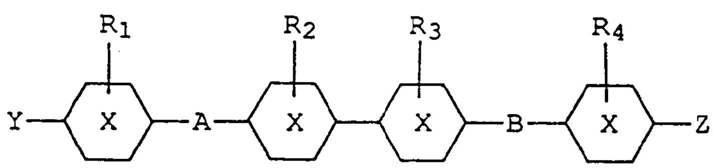

(c)

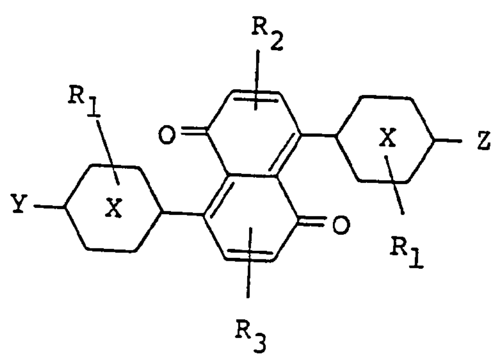

(f)

wherein

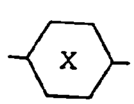

represents

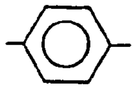 , 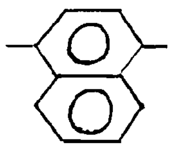 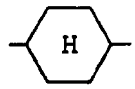 , 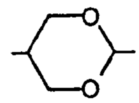

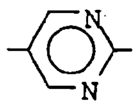 , 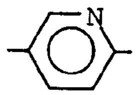 , 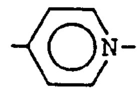 or 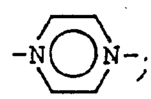 ;

-A- and -B- each represent -CH=N-,

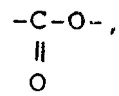 , 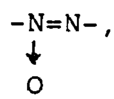 ,

-N=N-, -CH=CH-, -C≡C-,

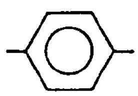 , 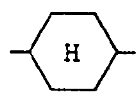 or 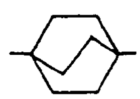 ;

Y- and Z- each represent H-, $CH_3(CH_2)_m$- $CH_3(CH_2)_mO$- Cl-, Br-, I-, F-, CHO-, $CH_3(CH_2)_mCOO$-, -CN, $-NO_2$, $-NH_2$, $-N(R)_2$, $-N-[(CH_2)_m-CH_3]_2$

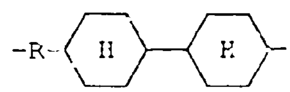 ,

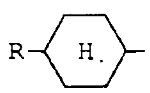 , 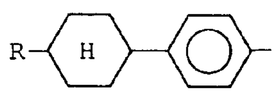 , 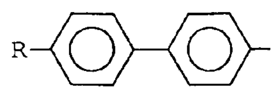 , R-O- ,

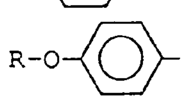 , 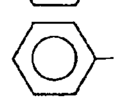 , 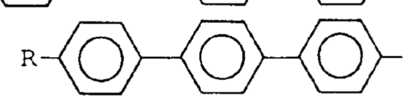 ,

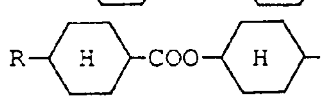 , 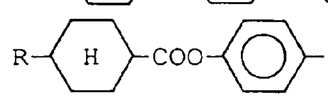 , 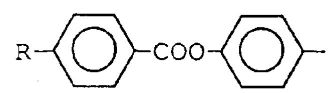

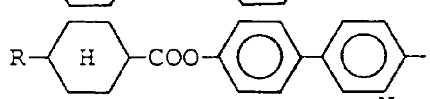 , 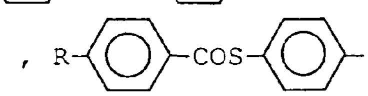 ,

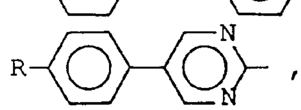 , 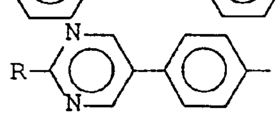 , 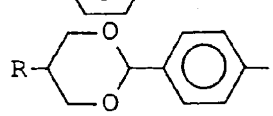 ,

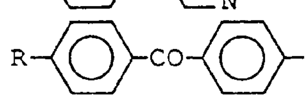 or 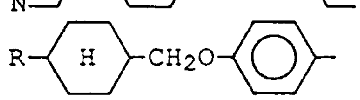

(where R represents a hydrogen atom or an alkyl group having 1 to 10 carbon atoms); $R_1$, $R_2$, $R_3$ and $R_4$ each represent H-, $CH_3(CH_2)_m$-, $CH_3(CH_2)_mO$-, Cl-, Br-, I-, F- or $O_2N$-; where m is an integer equal to 0 to 10 and n is an integer of 1 to 4.

2. A polarizing film according to Claim 1, wherein the dichroic substance having liquid crystal properties is contained in an amount of 0.001 to 15 % by weight per 100 parts by weight of the hydrophobic resin.

3. A polarizing film according to Claim 1, wherein the dichroic substance having liquid crystal properties is contained in an amount of 0.001 to 5 % by weight per 100 parts by weight of the hydrophobic resin.

4. A polarizing film according to Claim 1, wherein the hydrophobic resin is selected from a polyolefin, a polyvinylidene halide, a polyester and a polyamide.

5. A polarizing film according to Claim 1, which is obtained by kneading the dichroic substance having liquid crystal properties and the hydrophobic substance, fabricating a film by melting and extruding the kneaded product, followed by uniaxial stretching.

6. A polarizing film according to Claim 5, wherein uniaxial stretching is effected to 1.1 to 18-fold.

7. A polarizing film according to Claim 5, which is obtained by carrying out kneading at a temperature at which said dichroic substance having liquid crystal properties exhibits liquid crystal state or isotropic liquid state, and effecting uniaxial stretching at a temperature at which said dichroic substance having liquid crystal properties exhibits crystal state or liquid crystal state.

8. A polarizing film according to Claim 5, which is obtained by effecting uniaxial stretching at a temperature in the range of $T_m$ - 100°C to $T_m$ - 5°C, $T_m$ being the melting point of the hydrophobic resin and/or in the range of $T_g$ - 50°C to $T_g$ + 100°C, $T_g$ being the glass transition temperature of the hydrophobic resin.

9. A polarizing film according to Claim 1, wherein the maximum absorption wavelength of the dichroic substance having liquid crystal properties is 250 nm or higher.

10. A polarizing film according to Claim 1, wherein the temperature range of the liquid crystal phase of the dichroic substance having liquid crystal properties is 20 °C or higher.

11. A polarizing film according to any one of the claims 1 to 10 wherein said dichroic substance is selected from the group consisting of:

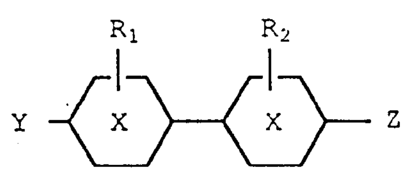
(a)

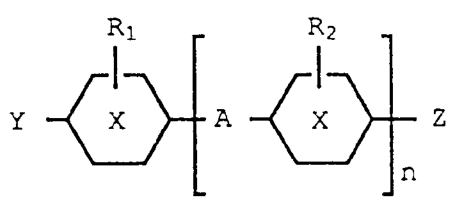
(b)

and

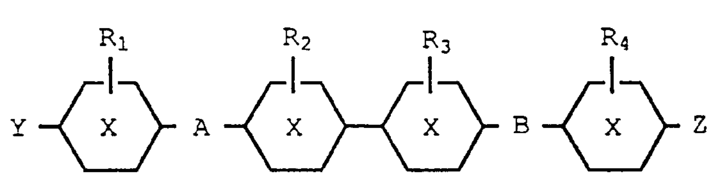
(c)

wherein

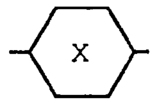

represents

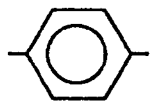 ;

-A- and -B- each represent -CH=N-,

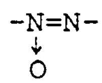 ,

-N=N- or -CH=CH-; Y- and Z- each represent $CH_3(CH_2)_m$-, $CH_3(CH_2)_mO$-, Cl-, Br-, I-, F-, CHO-, $CH_3(CH_2)_m$ COO-, -CN, $-NO_2$, $-NH_2$, $-N(R)_2$, $-N-((CH_2)_m-CH_3)_2$,

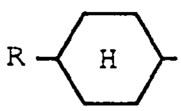 , 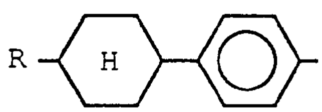 , 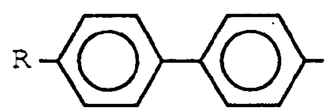 ,

R-O- , 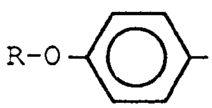 , 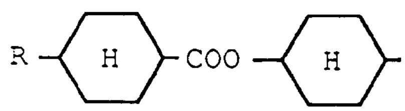 ,

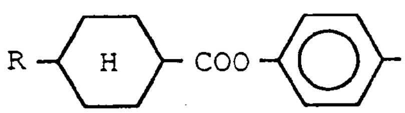 , 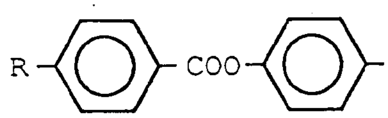 ,

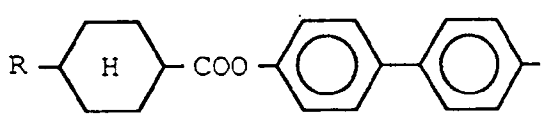 or 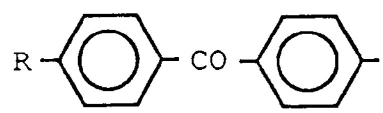 ,

where R represents a hydrogen atom or an alkyl group having 1 to 10 carbon atoms; $R_1$, $R_2$, $R_3$ and $R_4$ each represent H-, $CH_3(CH_2)_m$-, $CH_3(CH_2)_mO$-, Cl-, Br-, I-, F- or $O_2N$- where m is an integer equal to 0 to 10; and
n is an integer of 1 to 4; provided that Y- and Z- are different from each other.

**12.** A polarizing film according to Claim 11, wherein the dichroic substance having liquid crystal properties is selected from the compounds represented by the following formula:

$$Y\text{-}(N{=}N\text{-}E)_p(N{=}N\text{-}G)_q\text{-}z$$

wherein Y and Z each represent a terminal group as defined in Claim 11, E and G each represent a phenylene group or naphthylene group which may be substituted, and p and q each represent integers of 1 to 3.

**13.** A polarizing film according to Claim 11, wherein the dichroic substance having liquid crystal properties is

selected from the compounds represented by the following formula:

Y-N=CH-E-CH=N-Z

wherein Y and Z each represent a terminal group as defined in Claim 11, and E represents a phenylene group or a naphthylene group which may be substituted.

**14.** A polarizing film according to Claim 11, wherein the dichroic substance having liquid crystal properties is selected from the compounds represented by the following formula:

Y-CH=N-G-N=CH-Z

wherein Y and Z each represent a terminal group as defined in Claim 11, and G represents a phenylene group, a naphthylene group or a biphenylene group which may be substituted.

**15.** A polarizing film according to any one of claims 1 to 10, wherein said dichroic substance is selected from the group consisting of

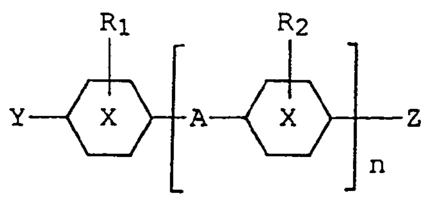

(b)

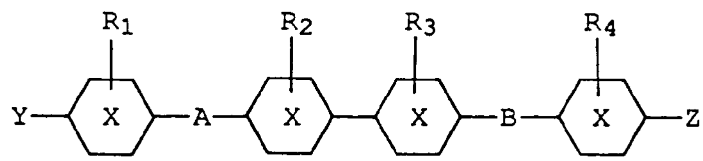

(c)

wherein $R_1$, $R_2$, $R_3$, $R_4$, A,B,Y,Z, n and

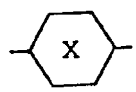

have meanings as defined in claim 1.

**16.** A polarizing film according to claim 15, wherein n is an integer of 3 or 4.

**Patentansprüche**

**1.** Polarisationsfilm, der eine dichroitische Substanz mit Flüssigkristalleigenschaften umfaßt, die in einem hoch orientierten hydrophoben Harz enthalten ist, wobei besagte dichroitische Substanz ausgewählt ist aus den Verbindungen, die durch die Formeln (a) bis (c) und (f) dargestellt werden:

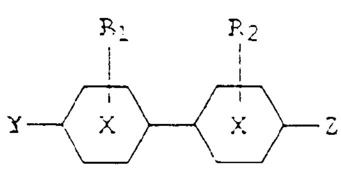

(a)

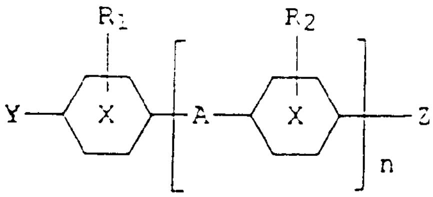

(b)

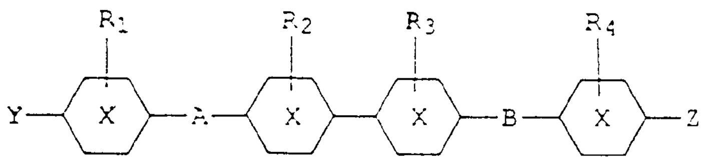

(c)

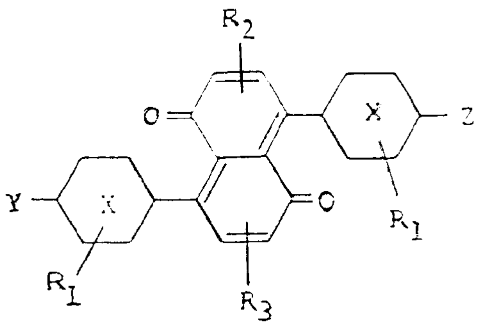

(f)

in der

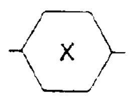

darstellt:

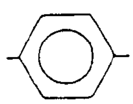 , 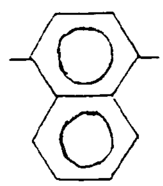 , 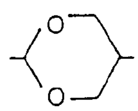 , 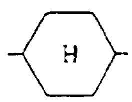

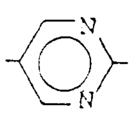 , 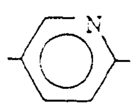 , 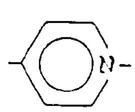 oder 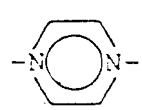

-A- und -B- jeweils -CH=N-,

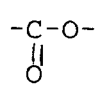 , 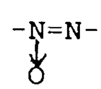 ,

-N=N-, -CH=CH-, -C=C-,

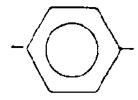 , 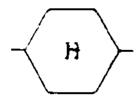 oder 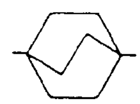

darstellen, Y- und Z- jeweils H-, $CH_3(CH_2)_m$-, $CH_3(CH_2)_mO$- Cl-, Br-, I-, F-, CHO-, $CH_3(CH_2)_mCOO$-, -CN, $-NO_2$ $-NH_2$, $-N(R)_2$, $-N-[(CH_2)_m-CH_3]_2$,

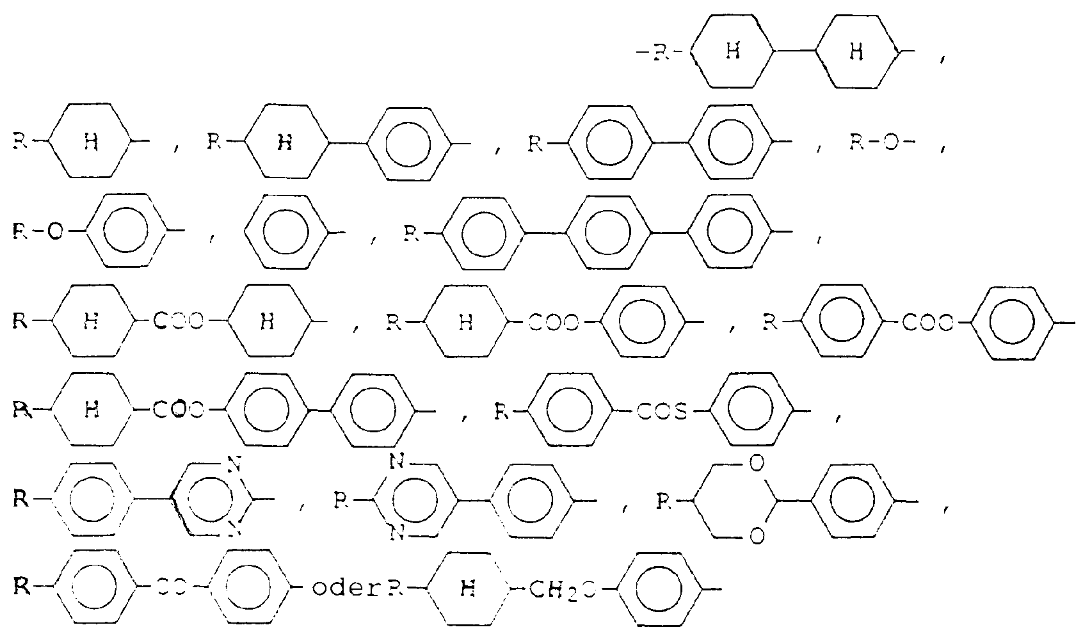

darstellen, wobei R ein Wasserstoffatom oder eine Alkylgruppe mit 1 bis 10 Kohlenstoffatomen ist; $R_1$, $R_2$, $R_3$ und $R_4$ jeweils H-, $CH_3(CH_2)_m$-, $CH_3(CH_2)_mO$-, Cl-, Br-, I-, F-, oder $NO_2$- darstellen und m eine Zahl von 0 bis 10 und n eine Zahl von 1 bis 4 ist.

2. Polarisationsfilm nach Anspruch 1, dadurch gekennzeichnet, daß die dichroitische Substanz mit Flüssigkristalleigenschaften in einer Menge von 0,001 bis 15 Gew.% auf 100 Gewichtsteile des hydrophoben Harzes enthalten ist.

3. Polarisationsfilm nach Anspruch 1, dadurch gekennzeichnet, daß die dichroitische Substanz mit Flüssigkristalleigenschaften in einer Menge von 0,001 bis 5 Gew.% auf 100 Gewichtsteile des hydrophoben Harzes enthalten ist.

4. Polarisationsfilm nach Anspruch 1, dadurch gekennzeichnet, daß das hydrophobe Harz aus einem Polyolefin, einem Polyvinylidenhalogenid, einem Polyester und einem Polyamid ausgewählt ist.

5. Polarisationsfilm nach Anspruch 1, der durch Kneten der dichroitischen Substanz mit Flüssigkristalleigenschaften und der hydrophoben Substanz, Herstellen eines Films durch Schmelzen und Extrudieren des verkneteten Produkts, gefolgt von uniaxialem Verstrecken erhalten wird.

6. Polarisationsfilm nach Anspruch 5, bei dem das uniaxiale Verstrecken auf das 1,1 bis 18 fache vorgenommen wird.

7. Polarisationsfilm nach Anspruch 5, der durch das Ausführen des Knetens bei einer Temperatur erhalten wird, bei der besagte dichroitische Substanz mit Flüssigkristalleigenschaften flüssigkristallinen Zustand

oder isotropen flüssigen Zustand zeigt, und der uniaxial verstreckt wird bei einer Temperatur, bei der besagte dichroitische Substanz mit Flüssigkristalleigenschaften kristallinen Zustand oder flüssigkristallinen Zustand zeigt.

**8.** Polarisationsfilm nach Anspruch 5, der erhalten wird durch uniaxiales Verstrecken bei einer Temperatur im Bereich von $T_m$- 100 °C bis $T_m$- 5 °C, wobei $T_m$ der Schmelzpunkt des hydrophoben Harzes ist und/oder im Bereich von $T_g$ - 50 °C bis $T_g$ + 100 °C, wobei $T_g$ die Glasübergangstemperatur des hydrophoben Harzes ist.

**9.** Polarisationsfilm nach Anspruch 1, dadurch gekennzeichnet, daß das Maximum der Absoptionswellenlänge der dichroitischen Substanz mit Flüssigkristalleigenschaften 250 nm oder höher ist.

**10.** Polarisationsfilm nach Anspruch 1, dadurch gekennzeichnet, daß der Temperaturbereich der flüssigkristallinen Phase der dichroitischen Substanz mit Flüssigkristalleigenschaften 20 °C oder höher ist.

**11.** Polarisationsfilm nach einem der Ansprüche 1 bis 10, dadurch gekennzeichnet, daß besagte dichroitische Substanz gewählt ist aus der Gruppe von:

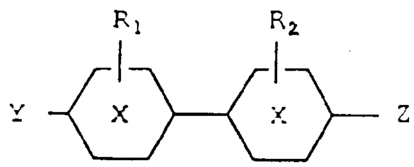

(a)

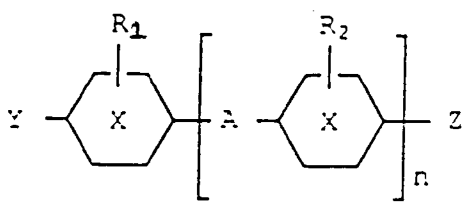

(b)

und

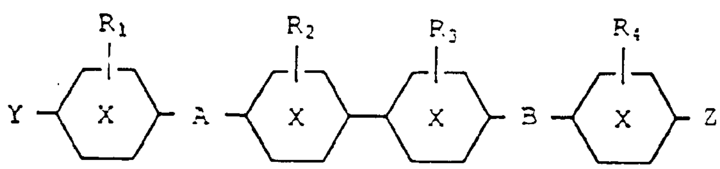

(c)

in der

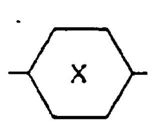

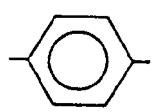

darstellt ; -A- und -B- jeweils -CH=N- ,

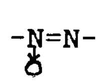

,

-N=N- oder -CH=CH- ; Y- und Z- jeweils $CH_3(CH_2)_m$- $CH_3(CH_2)_2O$-, Cl-, Br-, I-, F-, CHO-, $CH_3(CH_2)_mCOO$-, CN, $NO_2$, -$NH_2$, -$NR_2$, N-($(CH_2)_m$-$CH_3)_2$,

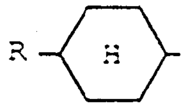, 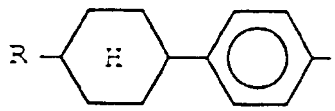, 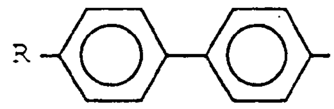,

R-O- , 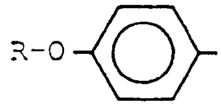, 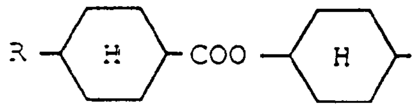,

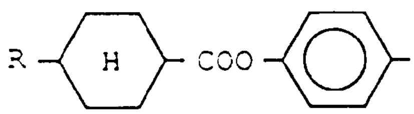, 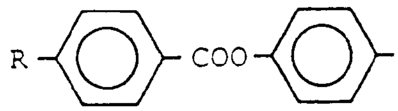,

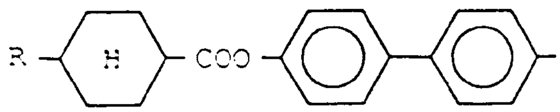 oder 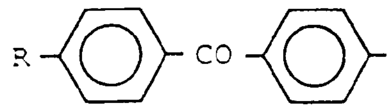

bedeuten, wobei R ein Wasserstoffatom oder eine Alkylgruppe mit 1 bis 10 Kohlenstoffatomen ist; $R_1$, $R_2$, $R_3$ und $R_4$ jeweils H-, $CH_3(CH_2)_m$- $CH_3(CH_2)_mO$-, Cl-, Br-, I-, F-, oder $NO_2$- darstellen und m eine Zahl von 0 bis 10 und n eine Zahl von 1 bis 4 ist, vorausgesetzt, daß Y- und Z- voneinander verschieden sind.

**12.** Polarisationsfilm nach Anspruch 11, dadurch gekennzeichnet, daß die dichroitische Substanz mit Flüssigkristalleigenschaften gewählt ist aus den Verbindungen, die durch die folgende Formel dargestellt sind:

$$Y\text{-}(N{=}N\text{-}E)_p(N{=}N\text{-}G)_q\text{-}Z$$

in der Y und Z jeweils eine Endgruppe, wie in Anspruch 11 definiert, E und G jeweils eine Phenylengruppe oder Naphthylengruppe, welche substituiert sein kann, und p und q jeweils Zahlen von 1 bis 3 bedeuten.

**13.** Polarisationsfilm nach Anspruch 11, dadurch gekennzeichnet, daß die dichroitische Substanz mit Flüssigkristalleigenschaften gewählt ist aus den Verbindungen, die durch die folgende Formel dargestellt sind:

Y-N=CH-E-CH=N-Z

in der Y und Z jeweils eine Endgruppe, wie in Anspruch 11 definiert, und E eine Phenylengruppe oder eine Naphthylengruppe, welche substituiert sein kann, bedeuten.

**14.** Polarisationsfilm nach Anspruch 11, dadurch gekennzeichnet, daß die dichroitische Substanz mit Flüssigkristalleigenschaften gewählt ist aus den Verbindungen, die durch die folgende Formel dargestellt sind:

Y-CH=N-G-N=CH-Z

in der Y und Z jeweils eine Endgruppe, wie in Anspruch 11 definiert, und G eine Phenylengruppe, eine Naphthylengruppe oder eine Biphenylengruppe, welche substituiert sein kann, bedeuten.

**15.** Polarisationsfilm nach einem der Ansprüche 1 bis 10, dadurch gekennzeichnet, daß besagte dichroitische Substanz gewählt ist aus der Gruppe von:

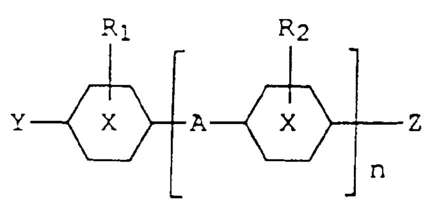 (b)

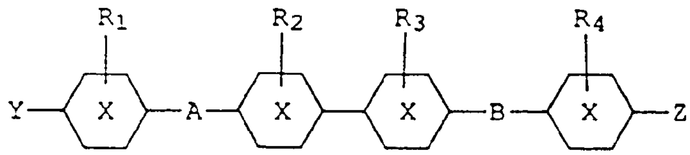

(c)

in der $R_1$, $R_2$, $R_3$, $R_4$, A, B, Y, Z, n und

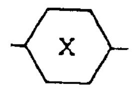

,

die Bedeutungen, wie in Anspruch 1 definiert, haben.

**16.** Polarisationsfilm nach Anspruch 15, dadurch gekennzeichnet, daß n eine Zahl von 3 oder 4 ist.

## Revendications

**1.** Film polarisant comprenant une substance dichroïque possédant les propriétés d'un cristal liquide, contenue et hautement orientée dans une résine hydrophobe, dans lequel ladite substance dichroïque est choisie parmi les composés représentés par les formules (a) à (c) et (f) :

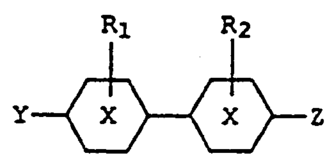

(a)

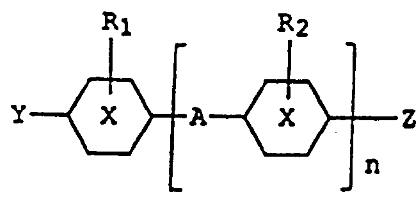

(b)

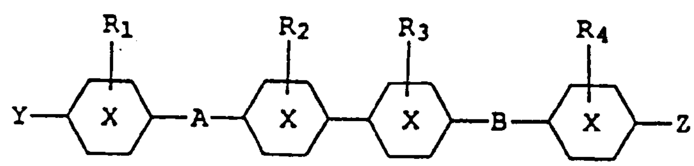

(c)

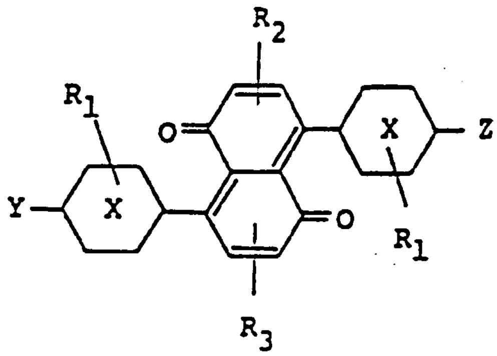

(f)

ou

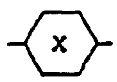

représente

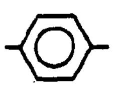 , 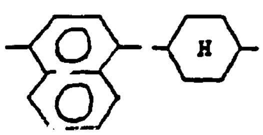 , 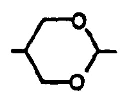

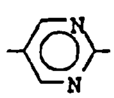 , 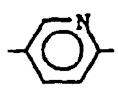 , 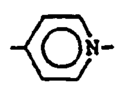 ou 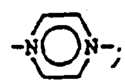;

-A- et -B- représentent chacun -CH=N-,

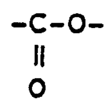, 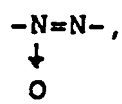,

-N=N-, -CH=CH-, -C≡C-,

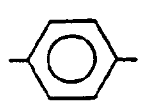 , 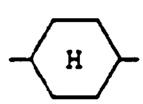 ou 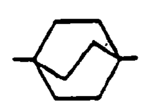 ;

Y- et Z- représentent chacun H-, $CH_3(CH_2)_m$-, $CH_3(CH_2)_mO$-, Cl-, Br-, I-, F-, CHO-, $CH_3(CH_2)_mCOO$-, -CN, $-NO_2$, $-NH_2$, $-N(R)_2$, -N- $[(CH_2)_m-CH_3]_2$,

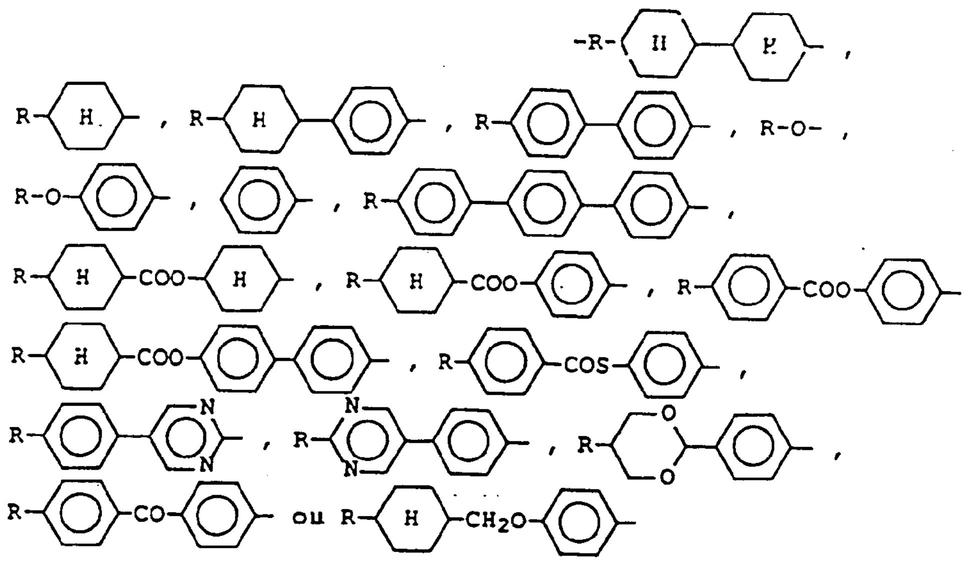

ou

(où R représente un atome d'hydrogène ou un groupe alkyle comportant 1 à 10 atomes de carbone); $R_1$, $R_2$, $R_3$ et $R_4$ représentent chacun H-, $CH_3(CH_2)_m$-, $CH_3(CH_2)_mO$-, Cl-, Br-, I-, F- ou $O_2N$-; où m est un nombre entier égal à 0-10; et n est un nombre entier de 1 à 4.

2. Film polarisant selon la revendication 1, dans lequel la substance dichroïque possédant les propriétés d'un cristal liquide est contenue dans une proportion de 0,001 à 15% en poids pour 100 parties en poids de la résine hydrophobe.

3. Film polarisant selon la revendication 1, dans lequel la substance dichroïque possédant les propriétés d'un cristal liquide est contenue dans une proportion de 0,001 à 5% en poids pour 100 parties en poids de la résine hydrophobe.

4. Film polarisant selon la revendication 1, dans lequel la résine hydrophobe est choisie parmi une polyoléfine, un poly(halogénure de vinylidène), un polyester et un polyamide.

5. Film polarisant selon la revendication 1, que l'on obtient en pétrissant la substance dichroïque possédant les propriétés d'un cristal liquide et la substance hydrophobe, en fabriquant un film par fusion et extrusion du produit pétri, suivies d'un étirement uniaxial.

6. Film polarisant selon la revendication 5, dans lequel l'étirement uniaxial est effectué à 1,1-1,8 fois.

7. Film polarisant selon la revendication 5, que l'on obtient en réalisant le pétrissage à une température à laquelle ladite substance dichroïque possédant les propriétés d'un cristal liquide se trouve à l'état de cristal liquide ou à un état liquide isotrope, et en effectuant l'étirement uniaxial à une température à laquelle ladite substance dichroïque possédant les propriétés d'un cristal liquide se trouve à l'état de cristal ou à l'état de cristal liquide.

8. Film polarisant selon la revendication 5, que l'on obtient en effectuant l'étirement uniaxial à une température dans la gamme de $T_m$ - 100°C à $T_m$ - 5°C, $T_m$ étant le point de fusion de la résine hydrophobe, et/ou dans la gamme de $T_g$ - 50°C à $T_g$ + 100°C, $T_g$ étant la température de transition vitreuse de la résine hydrophobe.

9. Film polarisant selon la revendication 1, dans lequel la longueur d'onde d'absorption maximale de la substance dichroïque possédant les propriétés d'un cristal liquide est d'au moins 250 nm.

10. Film polarisant selon la revendication 1, dans lequel la gamme de températures de la phase de cristal liquide de la substance dichroïque possédant les propriétés d'un cristal liquide est d'au moins 20°C.

11. Film polarisant selon l'une quelconque des revendications 1 à 10, dans lequel ladite substance dichroïque est choisie dans le groupe constitué par:

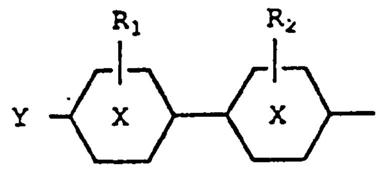 (a)

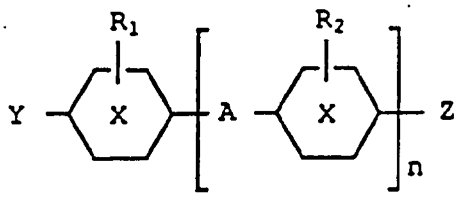 (b)

et

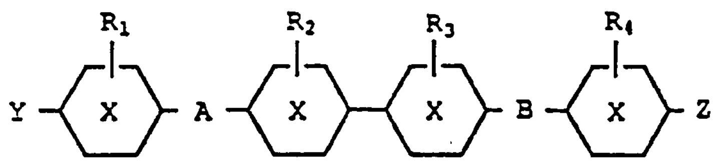 (c)

et où

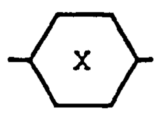

représente

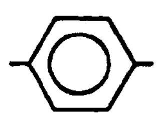 ;

-A- et -B- représentent chacun -CH=N-,

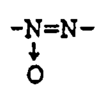 ,

-N=N- ou -CH=CH-; Y- et Z- représentent chacun $CH_3(CH_2)_m$-, $CH_3(CH_2)_mO$-, Cl-, Br-, I-, F-, CHO-, $CH_3(CH_2)_mCOO$-, -CN, $-NO_2$, $-NH_2$, $-N(R)_2$, $-N-[(CH_2)_m-CH_3]_2$,

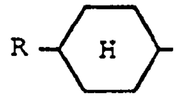 , 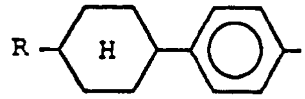 , 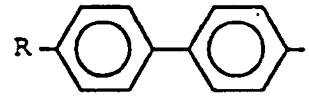 ,

R-O- , 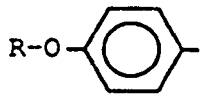 , 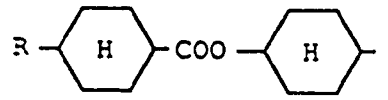 ,

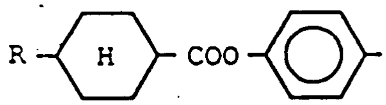 , 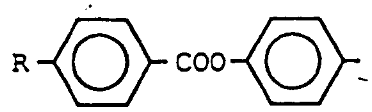 ,

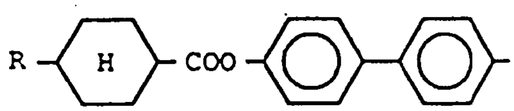 ou 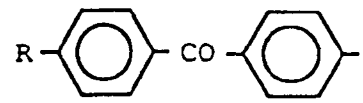 ,

où R représente un atome d'hydrogène ou un groupe alkyle comportant 1 à 10 atomes de carbone; $R_1$, $R_2$, $R_3$ et $R_4$ représentent chacun H-, $CH_3(CH_2)_m$-, $CH_3(CH_2)_mO$-, Cl-, Br-, I-, F- ou $O_2N$-; où m est un nombre entier égal à 0-10; et n est un nombre entier de 1 à 4, à condition que Y- et Z- soient différents l'un de l'autre.

**12.** Film polarisant selon la revendication 11, dans lequel la substance dichroïque possédant les propriétés d'un cristal liquide est choisie parmi les composés représentés par la formule suivante:

$$Y\text{-}(N{=}N\text{-}E)_p(N{=}N\text{-}G)_q\text{-}Z$$

dans laquelle Y et Z représentent chacun un groupe terminal tel que défini dans la revendication 11, E et G représentent chacun un groupe phénylène ou un groupe naphtylène qui peut être substitué, et p et q représentent chacun des nombres entiers de 1 à 3.

**13.** Film polarisant selon la revendication 11, dans lequel la substance dichroïque possédant les propriétés d'un cristal liquide est choisie parmi les composés représentés par la formule suivante:

Y-N=CH-E-CH=N-Z

dans laquelle Y et Z représentent chacun un groupe terminal tel que défini dans la revendication 11, et E représente un groupe phénylène ou un groupe naphtylène qui peut être substitué.

**14.** Film polarisant selon la revendication 11, dans lequel la substance dichroïque possédant les propriétés d'un cristal liquide est choisie parmi les composés représentés par la formule suivante:

Y-CH=N-G-N=CH-Z

dans laquelle Y et Z représentent chacun un groupe terminal tel que défini dans la revendication 11, et G représente un groupe phénylène, un groupe naphtylène ou un groupe biphénylène qui peut être substitué.

**15.** Film polarisant selon l'une quelconque des revendications 1 à 10, dans lequel ladite substance dichroïque est choisie dans le groupe constitué par

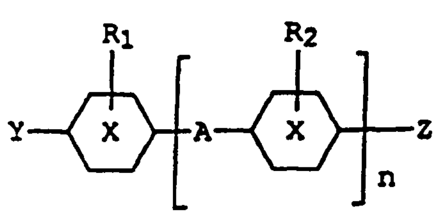 (b)

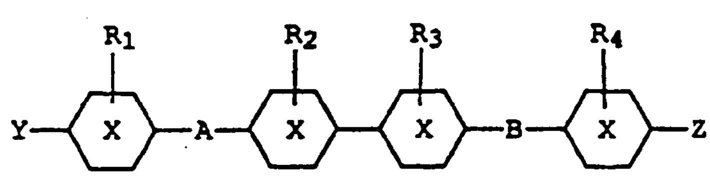 (c)

où $R_1$, $R_2$, $R_3$, $R_4$, A, B, Y, Z, n et

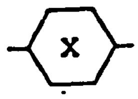

ont les significations définies dans la revendication 1.

**16.** Film polarisant selon la revendication 15, dans lequel n est un nombre entier de 3 ou 4.

FIG. 1